Europäisches Patentamt

European Patent Office

Office européen des brevets

(11) Numéro de publication: **0 236 167 B1**

(19)

(12) # FASCICULE DE BREVET EUROPEEN

(45) Date de publication de fascicule du brevet:
**25.09.91**

(51) Int. Cl.⁵: **G02F 1/133**

(21) Numéro de dépôt: **87400159.7**

(22) Date de dépôt: **23.01.87**

(54) **Ecran d'affichage à matrice active et à redondance lignes et colonnes.**

(30) Priorité: **27.01.86 FR 8601081**

(43) Date de publication de la demande:
**09.09.87 Bulletin 87/37**

(45) Mention de la délivrance du brevet:
**25.09.91 Bulletin 91/39**

(84) Etats contractants désignés:
**BE CH DE GB IT LI NL SE**

(56) Documents cités:
**EP-A- 0 103 523**
**WO-A-85/02931**
**US-A- 4 368 523**

(73) Titulaire: **Maurice, François**
**125 Boulevard de la Corniche**
**F-22700 Perros-Guirec(FR)**

(72) Inventeur: **Maurice, François**
**125 Boulevard de la Corniche**
**F-22700 Perros-Guirec(FR)**

(74) Mandataire: **Mongrédien, André et al**
**c/o BREVATOME 25, rue de Ponthieu**
**F-75008 Paris(FR)**

Rank Xerox (UK) Business Services

## Description

La présente invention a pour objet un écran d'affichage à matrice active et à redondance lignes et colonnes.

Elle trouve une application en opto-électronique dans la réalisation d'afficheurs à cristaux liquides utilisés notamment comme convertisseurs d'informations électriques en informations optiques.

Un écran d'affichage à matrice active comprend généralement deux plaques entre lesquelles est intercalé un matériau électrooptique comme un cristal liquide. Sur l'une des plaques, on trouve une matrice de pavés conducteurs transparents, des transistors en couches minces, une famille de lignes conductrices d'adressage et une famille de colonnes conductrices d'adressage. Chaque transistor possède une grille reliée à une ligne, une source reliée à un pavé et un drain relié à une colonne. Sur la seconde plaque, on trouve une contre-électrode.

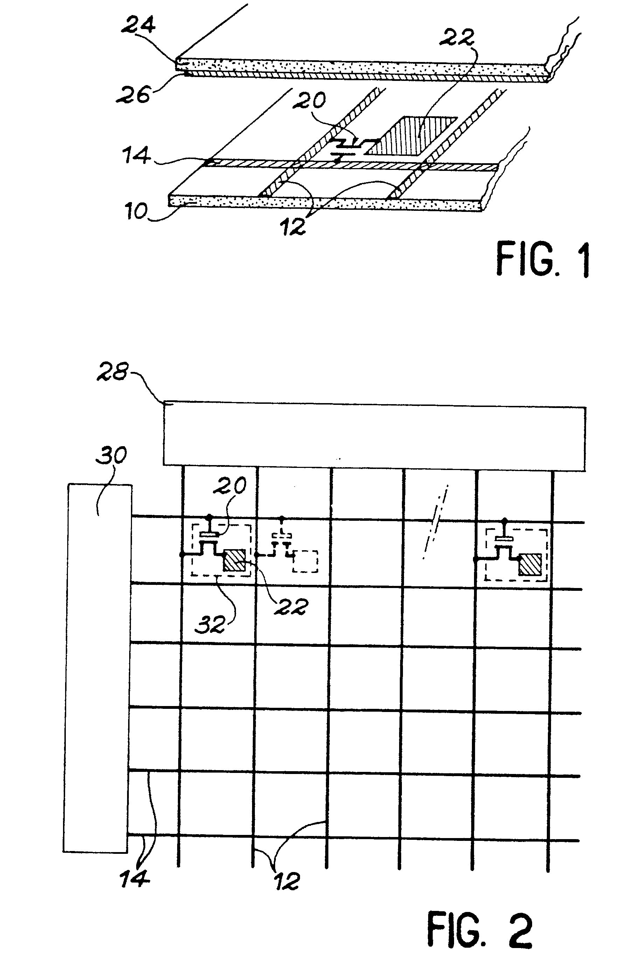

Une telle structure est représentée sur la figure 1. On y a représenté, de manière simplifiée, une plaque inférieure 10 portant des colonnes conductrices 12 et des lignes conductrices 14, un transistor 20 et un pavé conducteur 22 et une plaque supérieure 24 recouverte d'une contre-électrode 26.

Sur la figure 2, on a représenté le schéma équivalent de l'écran d'affichage global dont on a décrit un élément sur la figure 1. Cet écran comprend les colonnes conductrices 12, reliées à un circuit de commande 28 délivrant des tensions vidéo appropriées, et les lignes conductrices 14, reliées à un circuit de commande 30 délivrant des tensions d'adressage de lignes. En traits tiretés, on a représenté les points d'image 32 de l'écran d'affichage. Ils sont situés à l'intersection des lignes 14 et des colonnes 12 conductrices. Ces points d'image 32 (appelés encore "pixels" ou "eldims") comprennent chacun un transistor 20 et un condensateur. L'une des armatures est constituée par un pavé conducteur 22 déposé sur la plaque 10 et l'autre armature par une contre-électrode 26 disposée sur l'autre plaque 24.

En se référant à cette figure, on voit qu'en cas de coupure d'une rangée conductrice (soit une colonne 12, soit une ligne 14, la portion de rangée coupée n'est plus portée au potentiel de commande délivré par le circuit de commande 28 ou 30.

Ceci a pour résultat le non fonctionnement des eldims connectés à cette portion de rangée, ce qui se traduit par un effet parasite très visible sur l'écran d'affichage. Cet effet peut être par exemple une trainée blanche correspondant aux eldims défectueux reliés à la portion de rangée coupée sur un fond d'écran noir.

Le document US-A-4 368 523 propose une solution à ce problème en apportant une redondance au jeu de lignes et/ou de colonnes d'adressage. Selon ce document, chaque ligne et/ou colonne de pavés conducteurs est associée à deux lignes ou colonnes d'adressage relies, à une extrémité par un pont conducteur. Si l'une de ces lignes ou colonnes d'adressage est coupée, la ligne ou colonne de pavés peut encore être adressée par l'autre ligne ou colonne supposée en état. En d'autres termes, chaque ligne (ou colonne) est dédoublée physiquement, mais reste la même électriquement.

Cette technique présente cependant un inconvénient, qui est de multiplier par 2 le nombre de lignes et par 2 le nombre de colonnes, ce qui réduit considérablement la surface de l'écran restant disponible pour l'affichage.

La présente invention résout le problème de la coupure des lignes ou des colonnes d'une autre manière en conservant le même nombre de lignes et de colonnes.

Ce résultat est obtenu en reliant entre elles les extrémités des lignes et des colonnes conductrices par des résistances. Chaque ligne (ou colonne) de pavés reste donc associée à une ligne (ou colonne) et une seule, mais en cas de coupure elle peut être alimentée par le signal véhiculé par les lignes (ou colonnes) adjacentes affectées normalement aux deux lignes (ou colonnes) de pavés adjacentes, à condition toutefois de modifier légèrement la forme des signaux de commande pour que les signaux appliqués aux lignes adjacentes puissent se combiner de manière appropriée sur la ligne défaillante. Les lignes (ou colonnes) ne sont donc pas dédoublées, mais restent uniques et électriquement distinctes les unes des autres.

De façon précise, la présente invention a pour objet un écran d'affichage selon la revendication 1 ci-après.

Selon un mode de réalisation préféré de l'invention, chaque résistance a une valeur Rs supérieure à l'impédance de sortie des circuits de commande, très supérieure à la résistance de chaque rangée d'électrodes, et telle que $\frac{Rs}{2}$ soit très inférieur à $\frac{Ra}{n}$ où Ra est l'impédance caractéristique de chaque élément d'affichage vue de la ligne ou de la colonne considérée et n le nombre d'éléments actifs simultanément sur la ligne ou la colonne.

Une variante de l'écran d'affichage selon l'invention permet d'apporter une protection antistatique. A cette fin, le réseau de résistances reliant entre elles les lignes et le réseau de résistances reliant entre elles les colonnes, sont interconnectés par une résistance Rp de valeur égale ou voisine de la résistance Rs.

Selon un mode de réalisation préféré, l'ensemble des résistances Rs et Rp est constitué par une bande résistive faisant le tour de l'écran d'affichage, cette bande étant en contact avec les lignes et les colonnes.

L'invention apparaîtra mieux à la lecture de la description qui va suivre, donnée à titre purement illustratif et nullement limitatif en référence aux dessins annexés qui font suite aux figures 1 et 2 déjà décrites et sur lesquels :

- la figure 3 est une vue schématique des lignes conductrices déposées sur la première plaque d'un écran d'affichage selon l'invention,
- la figure 4 est une autre disposition possible des lignes conductrices,
- la figure 5 montre des chronogrammes illustrant la commande d'une portion de ligne conductrice coupée,
- la figure 6 montre des chronogrammes illustrant une variante de la commande d'une portion de ligne conductrice coupée,
- la figure 7 montre l'ensemble des résistances utilisées pour obtenir une protection antistatique,
- la figure 8 représente schématiquement une bande résistive permettant d'obtenir les résistances de liaison entre lignes et colonnes.

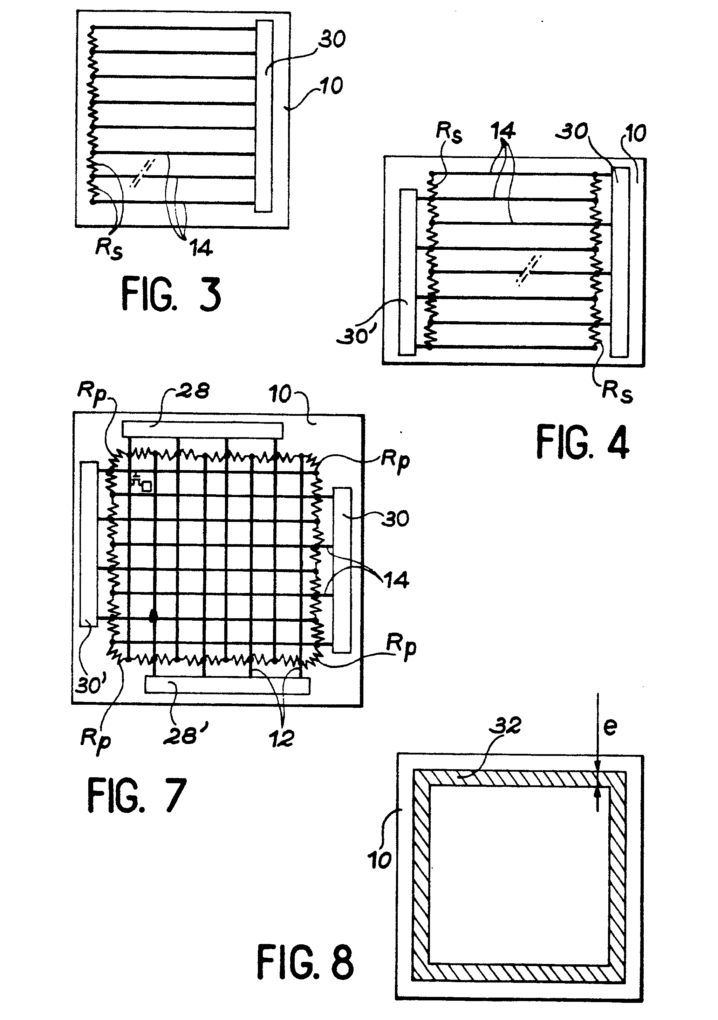

Sur la figure 3, on a représenté des lignes conductrices 14 déposées sur une première plaque 10 d'un écran d'affichage selon l'invention. Ces lignes 14 ont une résistance $R_L$ et sont connectées à un circuit de commande 30.

Selon la principale caractéristique de l'invention, les lignes 14 sont reliées entre elles à leurs extrémités par des résistances Rs.

De même, les colonnes conductrices déposées sur la première plaque 10 de l'écran d'affichage sont reliées entre elles à leurs extrémités par des résistances Rs (non représentées).

Ces résistances Rs créent une redondance ligne et/ou colonne permettant, en cas de coupure d'une ligne et/ou d'une colonne, de porter la portion de la ligne et/ou de la colonne coupée à un potentiel égal à la demi-somme des potentiels des lignes et/ou des colonnes voisines.

Sur la figure 4, on a représenté une autre disposition possible des lignes conductrices. Les lignes 14 sont connectées alternativement au circuit 30 qui est disposé sur le côté droit de la plaque 10 et à un circuit de commande 30' qui est disposé en regard du circuit 30 sur le côté gauche de la plaque 10.

Ainsi, la première plaque 10 de l'écran d'affichage comprend, en alternance, une ligne conductrice 14 connectée au circuit de commande 30, une ligne conductrice 14 connectée au circuit de commande 30', une ligne conductrice 14 connectée au circuit de commande 30, etc...

Les lignes 14 sont reliées entre elles à leurs deux extrémités par des résistances Rs.

Comme dans la variante de la figure 3, ces résistances créent une redondance ligne permettant, en cas de coupure d'une ligne, de porter la portion de la ligne coupée à un potentiel égal à la demi-somme des potentiels des lignes voisines connectées au même circuit de commande que la ligne coupée.

De même, les colonnes conductrices 12 peuvent être connectées alternativement à deux circuits de commande disposés en haut et en bas sur la plaque 10.

Les résistances Rs doivent vérifier plusieurs conditions pour ne pas nuire au bon fonctionnement de l'écran d'affichage.

Tout d'abord, la résistance Rs doit être supérieure à l'impédance de sortie des circuits de commande. Cette condition permet de rester dans les limites d'utilisation des circuits de commande et de ne pas surcharger ces derniers. Ensuite, la résistance Rs doit être très supérieure à la résistance des lignes et/ou des colonnes. Cette condition permet aux lignes et aux colonnes non coupées de rester équipotentielles. Enfin, la résistance Rs doit être très inférieure à

$$\frac{2\,R\,a}{n}$$

où Ra est l'impédance caractéristique d'un élément d'affichage n le nombre de ces éléments actifs simultanément sur la ligne ou la colonne. Cette dernière condition permet à la portion de la rangée coupée, d'être portée à un potentiel égal à la demi-somme des potentiels des rangées voisines.

On va maintenant décrire la commande de l'écran d'affichage selon l'invention, en cas de coupure d'une rangée d'électrode (ligne ou colonne).

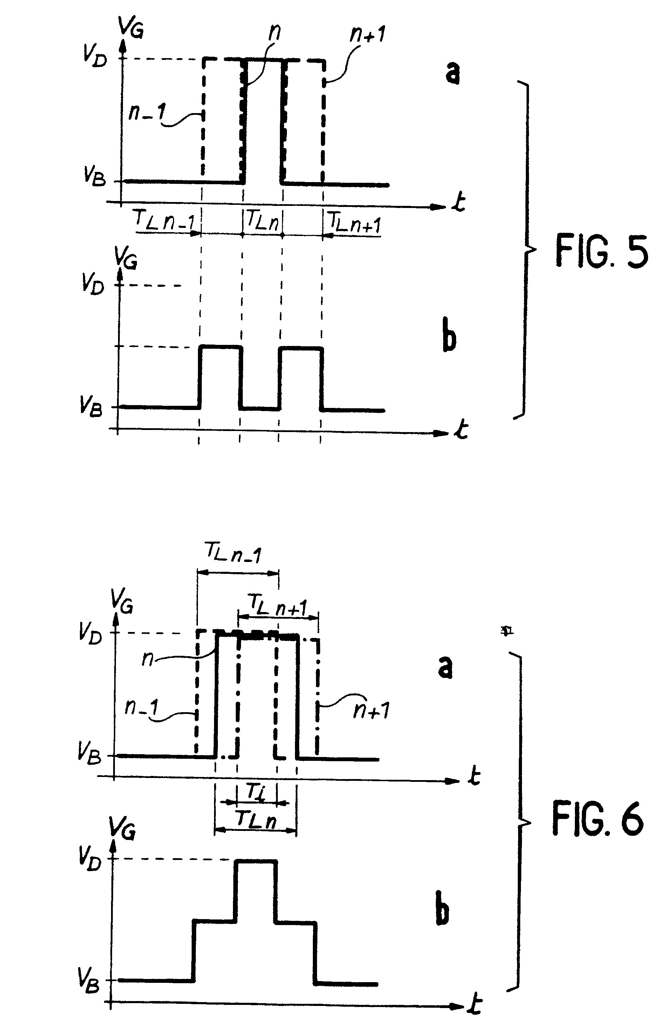

Lorsque les circuits de commande 28 ou 30 délivrent des signaux de commande vidéo composites, la portion de rangée coupée est portée à un potentiel égal à la demi-somme des potentiels des rangées voisines. Les eldims isolés par la coupure sont ainsi commandés par un potentiel vidéo moyen qui se rapproche du potentiel vidéo de commande que reçoit la rangée. De façon plus précise, sur la figure 5, on a représenté des chronogrammes illustrant une commande d'une portion de ligne conductrice coupée. La partie a représente la tension $V_G$ appliquée sur une ligne, c'est-à-dire, finalement aux grilles des transistors reliés à cette ligne. L'indice n représente le rang de la ligne. La tension $V_G$ est un signal en forme d'impulsions avec une valeur de blocage $V_B$ et une valeur de déblocage $V_D$. Chaque point d'image de la ligne n est activé pendant l'intervalle de temps $TL_n$ pendant lequel la tension de ligne $V_G$ est égale à $V_D$. En traits tiretés sont représentées les tensions appliquées aux lignes n-1 et n+1 et en trait plein la tension appliquée à la ligne n.

Les signaux de commande délivrés par le circuit de commande 28 sur les colonnes conductrices 12 sont des signaux vidéo (non représentés).

La partie b représente la tension appliquée sur la grille des transistors reliés à la portion de la ligne n supposée coupée. Grâce à la redondance ligne créée par la résistance Rs, la portion de la ligne coupée est portée à un potentiel égal à la demi-somme des potentiels de la ligne n-1 et de la ligne n+1. Comme on peut le voir, ce potentiel reste inférieur à la tension de déblocage $V_D$. Dans ces conditions, la portion de ligne coupée est portée à un potentiel ne permettant pas de rendre actifs les points d'image correspondants. Cette commande n'est donc pas applicable à l'écran d'affichage conforme à l'invention.

Sur la figure 6, on a représenté les chronogrammes correspondant à une commande possible.

La partie a représente la tension $V_G$ appliquée aux lignes n-1,n,n+1. Cette tension présente encore une valeur de déblocage $V_D$ et une valeur de blocage $V_B$. Chaque point d'image de la ligne n est activé pendant l'intervalle $TL_n$ pendant lequel la tension $V_G$ est égale à $V_D$.

En traits tiretés, on a représenté les tensions appliquées respectivement aux lignes n-1 et n+1. Ces lignes n-1 et n+1 ont respectivement un temps d'adressage ligne $TL_{n-1}$ et $TL_{n+1}$.

Les temps d'adressage ligne $TL_{n-1}$,$TL_n$ et $TL_{n+1}$ se chevauchent de telle sorte que pendant un intervalle $T_i$ correspondant à la superposition des trois temps d'adressage, les trois lignes $L_{n-1}$, $L_n$ et $L_{n+1}$ reçoivent, en même temps, une tension $V_G$ égale à la tension de déblocage.

La partie b représente la tension à laquelle est portée une portion de la ligne n supposée coupée. Cette tension est égale à la demi-somme des tensions des lignes n-1 et n+1. Comme on peut le voir, pendant l'intervalle $T_i$, la demi-somme des potentiels de la ligne n-1 et de la ligne n+1 est égale à la tension de déblocage $V_D$. La portion de ligne coupée est ainsi portée à un potentiel permettant de rendre actifs les points d'image connectés à cette portion de ligne.

Sur la figure 7, on a représenté des rangées d'électrodes organisées en colonnes conductrices 12 et en lignes conductrices 14. Les colonnes conductrices 12 sont connectées alternativement au circuit de commande 28 qui est disposé en haut de la première plaque 10 et au circuit de commande 28' qui est disposé en bas.

Les lignes conductrices 14 sont connectées alternativement au circuit de commande 30 qui est disposé à droite et au circuit de commande 30' qui est disposé à gauche.

Toutes les lignes et toutes les colonnes conductrices sont reliées entre elles, à leurs extrémités, par des réseaux de résistances Rs. Les réseaux de résistances reliant entre elles les lignes 14 et le réseau de résistances reliant entre elles les colonnes 12 sont interconnectés par des résistances Rp.

La valeur de Rp est égale ou voisine de celle de Rs. L'impédance maximale entre une ligne 14 et une colonne 12 quelconques est de l'ordre de

$$\frac{nL + nC}{2}$$

Rs avec nL et nC correspondant respectivement au nombre de lignes et de colonnes de l'écran d'affichage. Cette impédance tend à égaliser les potentiels des lignes et des colonnes pendant la réalisation et la manipulation de l'écran d'affichage. Ceci a pour résultat de protéger l'écran contre l'accumulation d'électricité statique qui pourrait apparaître lors de la manipulation ou lors de la réalisation de l'écran d'affichage. L'apparition de telles charges aux croisements des lignes et des colonnes est ainsi supprimée. Cette interconnexion des réseaux de résistances Rs par des résistances Rp permet donc d'obtenir une protection antistatique de l'écran d'affichage.

On va maintenant décrire un mode de réalisation des résistances Rs et Rp.

Les conditions imposées à Rs entraînent quelques contraintes concernant la réalisation de ces résistances et des lignes et colonnes.

La première condition impose à la résistance Rs d'être supérieure à l'impédance de sortie des circuits de commande. La valeur de Rs ne doit donc pas être trop petite. Par example, elle sera supérieure ou égale à 100 kΩ lorsque le circuit de commande ne peut débiter plus de 0,1 mA pour chaque ligne ou colonne sous une tension de commande de 10 volts.

La seconde condition implique que les colonnes 12 et les lignes 14 aient une valeur résistive très inférieure à Rs. Par exemple, les résistances des rangées d'électrodes doivent être de l'ordre de 1 à 10 KΩ. Cette contrainte exclut pratiquement l'utilisation d'oxyde conducteur tel que l'oxyde d'étain et d'indium (ITO) pour la réalisation des lignes ou des colonnes.

La combinaison de toutes ces conditions et de ces contraintes impose la réalisation des lignes et des colonnes conductrices en un métal peu résistif tel que l'aluminium.

Sur la figure 8, on a représenté un exemple de réalisation des réseaux de résistances dans le cas d'une protection antistatique telle que décrite en référence à la figure 7. L'ensemble des résistances Rs et Rp est obtenu par une bande résistive 32 faisant le tour de la plaque. Cette bande 32 est en contact avec les lignes 14 et les colonnes 12. Elle est réalisée de préférence en oxyde d'étain et d'indium. Par exemple lorsque les points d'image ont une largeur de l'ordre de 250 μm et lorsque la valeur résistive de Rs est de l'ordre de 100 kΩ, la largeur e de la bande 32 est de l'ordre de 25 μm.

Cette bande 32 peut être obtenue par dépôt d'ITO lors de la première étape du procédé de fabrication de la matrice de la première plaque. De cette façon, la bande résistive 32 produit une protection antistatique lors des étapes suivantes du procédé de fabrication de l'écran.

## Revendications

1. Ecran d'affichage à matrice active comprenant une première (10) et une seconde (24) plaques transparentes entre lesquelles est inséré un cristal liquide, la première plaque (10) comprenant des lignes et des colonnes de pavés conducteurs (22) définissant une matrice d'éléments d'affichage (32), des lignes conductrices (14) et des colonnes conductrices (12) d'adressage de ces pavés conducteurs (22), une ligne de pavés conducteurs (22) étant associée à une seule ligne conductrice d'adressage (14) et une colonne de pavés conducteurs (22) étant associée à une seule colonne conductrice d'adressage (12), ces lignes et colonnes conductrices (14, 12) étant reliées à des circuits de commande (30, 28) de l'affichage, la seconde plaque (24) comprenant une contre-électrode (26), cet écran d'affichage étant caractérisé par le fait que les lignes (14) et/ou les colonnes (12) conductrices associées à des lignes et/ou des colonnes de pavés conducteurs différentes sont reliées entre elles à leurs extrémités par des résistances.

2. Ecran d'affichage selon la revendication 1, caractérisé en ce que chaque résistance a une valeur Rs supérieure à l'impédance de sortie des circuits de commande, très supérieure à la résistance de chaque rangée d'électrodes, et telle que $\frac{Rs}{2}$ soit très inférieur à $\frac{Ra}{n}$ où Ra est l'impédance caractéristique de chaque élément d'affichage vue de la ligne ou la colonne considérée et n le nombre d'éléments actifs simultanément sur la ligne (14) ou la colonne (12).

3. Ecran d'affichage selon la revendication 1, caractérisé par le fait que le réseau de résistance reliant entre elles les lignes (14) et le réseau de résistances reliant entre elles les colonnes (12) sont interconnectés par une résistance Rp de valeur égale ou voisine de la résistance Rs.

4. Ecran d'affichage selon la revendication 3, caractérisé par le fait que l'ensemble des résistances Rs et Rp est constitué par une bande résistive (32) faisant le tour de l'écran d'affichage, cette bande étant en contact avec les lignes (14) et les colonnes (12).

## Claims

1. Display screen incorporating an active matrix comprising a first (10) and a second (24) transparent plate between which a liquid crystal is inserted, the first plate (10) comprising rows and columns of conductive blocks (22) defining a matrix of display elements (32), conductive rows (14) and conductive columns (12) for addressing these conductive blocks (22), a row of conductive blocks (22) being associated with a single addressing conductive row (14) and a column of conductive blocks (22) being associated with a single addressing conductive column (12), these conductive rows and columns (14, 12) being connected to circuits (30, 28) for commanding the display, the second plate (24) comprising a counter-electrode (26), this display screen being characterised in that the conductive rows (14) and/or columns (12) associated with different rows and/or columns of conductive blocks are connected to one another at their ends by resistors.

2. Display screen according to Claim 1, characterised in that each resistor has a value Rs greater than the output impedance of the command circuits, very much greater than the resistance of each line of electrodes, and such that $\frac{Rs}{2}$ is very much less than $\frac{Ra}{n}$ where Ra is the characteristic impedance of each display element seen from the row or the column under consideration and n is the number of elements which are active simultaneously on the row (14) or the column (12).

3. Display screen according to Claim 1, characterised in that the resistor grid connecting the rows (14) to one another and the grid of resistors connecting the columns (12) to one another are interconnected by a resistor Rp of value equal or close to the resistance Rs.

4. Display screen according to Claim 3, characterised in that the set of resistors Rs and Rp is formed by a resistive strip (32) extending around the display screen, this strip being in contact with the rows (14) and the columns (12).

## Patentansprüche

1. Anzeige-Bildschirm mit aktiver Matrix, der eine erste (10) und eine zweite (24) transparente Platte aufweist, zwischen denen ein Flüssigkristall eingesetzt ist, wobei die erste Platte (10) Zeilen und Spalten von blockförmigen Leiterelementen (22), die eine Matrix von Anzeigeelementen (32) bilden, Leiterzeilen (14) und Leiterspalten (12) zum Adressieren der blockförmigen Leiterelemente (22) aufweist, wobei eine Zeile von blockförmigen Leiterelementen (22) mit einer einzigen Zeile von Adreßleitern (14) und eine Spalte von blockförmigen Leiterelementen (22) mit einer einzigen Spalte von Adreßleitern (12) in Verbindung steht, wobei die Zeilen und Spalten von Leitern (14, 12) mit Steuerschaltkreisen (30, 28) der Anzeige in Verbindung stehen, wobei die zweite Platte (24) eine Gegenelektrode (26) aufweist, wobei der Anzeige-Bildschirm dadurch **gekennzeichnet** ist, daß die Leiterzeilen (14) und/oder Leiterspalten (12), die mit den verschiedenen Zeilen und/oder Spalten der blockförmigen Leiterelemente in Verbindung stehen, untereinander an ihren Enden über Widerstände verbunden sind.

2. Anzeige-Bildschirm nach Anspruch 1, **dadurch gekennzeichnet, daß** jeder Widerstand ein Größe Rs hat, die über der Ausgangsimpendanz des Steuerschaltkreises und wesentlich über dem Widerstand jeder Reihe von Elektroden liegt und so gewählt ist, daß Rs/2 erheblich unter Ra/n liegt, wobei Ra die Impedanz, die für jedes Anzeigeelement der betrachteten Zeile oder Spalte charakteristisch ist, und n die Anzahl der gleichzeitig in der Zeile (14) oder Spalte (12) aktiven Elemente ist.

3. Anzeige-Bildschirm nach Anspruch 1, **dadurch gekennzeichnet, daß** das Netz der Widerstände, das die Zeilen (14) untereinander verbindet, und das Netz der Widerstände, das die Spalten (12) untereinander verbindet, durch einen Widerstand Rp miteinander verbunden sind, dessen Wert dem Widerstand Rs gleich oder nahezu gleich ist.

4. Anzeige-Bildschirm nach Anspruch 3, **dadurch gekennzeichnet, daß** die Anordnung aus den Widerständen Rs und Rp aus einem Widerstandsband (32) gebildet wird, das um den Anzeige-Bildschirm herumgeht, wobei dieses Band mit den Zeilen (14) und Spalten (12) in Kontakt steht.

FIG. 1

FIG. 2

7

FIG. 3

FIG. 4

FIG. 7

FIG. 8

8

FIG. 5

FIG. 6